## Europäisches Patentamt
## European Patent Office
## Office européen des brevets

(19)

(11) Publication number: **0 115 752**
**B1**

(12) **EUROPEAN PATENT SPECIFICATION**

(45) Date of publication of patent specification: **10.12.86**

(51) Int. Cl.⁴: **C 01 B 3/02, C 01 C 1/04**

(21) Application number: **83870006.0**

(22) Date of filing: **28.01.83**

(54) Improved process and apparatus for the production of ammonia.

(43) Date of publication of application:
**15.08.84 Bulletin 84/33**

(45) Publication of the grant of the patent:
**10.12.86 Bulletin 86/50**

(84) Designated Contracting States:
**AT BE CH DE FR IT LI LU NL SE**

(56) References cited:
**FR-A-2 496 078**
**GB-A-1 597 070**
**GB-A-2 033 882**
**GB-A-2 103 199**
**US-A-3 430 418**
**US-A-3 986 849**

(73) Proprietor: **UNION CARBIDE CORPORATION**
**39 Old Ridgebury Road**
**Danbury Connecticut 06817 (US)**

(72) Inventor: **Fuderer, Andrija**
**W. Raabestraat 7**
**B-2050 Antwerpen (BE)**

(74) Representative: **Plucker, Guy et al**
**OFFICE KIRKPATRICK 4 Square de Meeu7s**
**B-1040 Bruxelles (BE)**

Courier Press, Leamington Spa, England.

## Description

### Background of the invention
### Field of the invention

The invention relates to the production of ammonia. More particularly, it relates to an improved process and apparatus for forming ammonia synthesis gas.

### Description of the prior art

The presently standard ammonia production technology is the process based on the steam reforming of natural gas or naphtha followed by a secondary reforming with air. Efforts have been made, however, to develop energy saving cycles, particularly in light of the drastic increase in energy costs that has occurred in recent years. Most of such developments do not employ pressure swing adsorption (PSA) technology for the purification of hydrogen to be employed in an ammonia synthesis gas stream.

The alternates to PSA-hydrogen purification include wash systems for carbon dioxide removal and methanation operations or a nitrogen wash for carbon monoxide removal. None of the alternate approaches provides for the complete removal of all contaminants and inerts from the hydrogen-containing gas to be purified in a single purification step. The potential for process simplification offered by the PSA-hydrogen purification process represents a desirable feature of this approach as compared with the alternates known in the art. This is of particular commercial significance since ammonia production constitutes the largest hydrogen consumer of all chemical processing industries. In addition to the growing market for ammonia, old ammonia plants are becoming obsolete, and a number of large new plants are being built to satisfy the demand for ammonia in more economical systems to offset the continually rising cost of energy.

The presently preferred feedstock for ammonia production is natural gas. Where natural gas is expensive or unavailable, naphtha is the next most preferred feedstock, but is found to be rapidly increasing in value, leading to a growing trend to base commercial plants on heavier petroleum fractions and coal. These feedstocks require oxygen for partial oxidation, generally with an oxygen supply from a captive air separation system. The nitrogen recovered from such a system can, of course, be employed in the overall ammonia synthesis operation.

It has heretofore been proposed to employ external source nitrogen as a purging gas in the purification of hydrogen used for ammonia production, as evidenced by BE—A—855 126. As in conventional PSA processing, the external source nitrogen purge is utilized in such an approach at as low a pressure as possible, e.g., about 160 to 200 kPa absolute, so as to minimize the purge gas flow rate and compression power requirements. This has been consistent with the need to develop economical techniques for reducing the costs of producing ammonia synthesis gas.

Another process for preparing ammonia synthesis gas using pressure swing adsorption (PSA) is disclosed in FR—A—2496078. In this process, $CH_4$ containing feed gas is converted by autothermic catalytic reforming into carbon oxide and hydrogen; the hydrogen thus produced is purified by multistage PSA and mixed with nitrogen obtained from an air decomposition unit.

It will be evident, however, that further improvements in the field of ammonia production are desirable in the art. In light of the high costs of energy, such improvements that may particularly enable energy costs to be reduced are especially desirable, and even necessary, if ammonia synthesis gas and ammonia are to be available at economical costs to satisfy growing industrial requirements.

It is an object of the invention, therefore, to provide an improveed process and apparatus for the production of ammonia.

It is another object of the invention to provide a process and apparatus for the reduction of the energy costs associated with production of ammonia synthesis gas.

It is a further object of the invention to provide an improved PSA hydrogen purification system for use in the production of ammonia.

With these and other objects in mind, the invention is hereinafter described in detail, the novel features thereof being particularly pointed out in the approved claims.

### Summary of the invention

Nitrogen at an elevated pressure is effectively utilized to purge a PSA-hydrogen system, with the elevated pressure enabling a highly desirable ammonia synthesis gas to be recovered from the system. In addition, the elevated purge pressure enables the effluent purge gas to be used for power generation, most advantageously in an overall, integrated system including hydrogen generation, PSA-hydrogen purification, ammonia synthesis and air separation. The generated power can be used for said air separation, with recovered nitrogen being used as said elevated pressure purging and with recovered oxygen being used in the generation of said hydrogen.

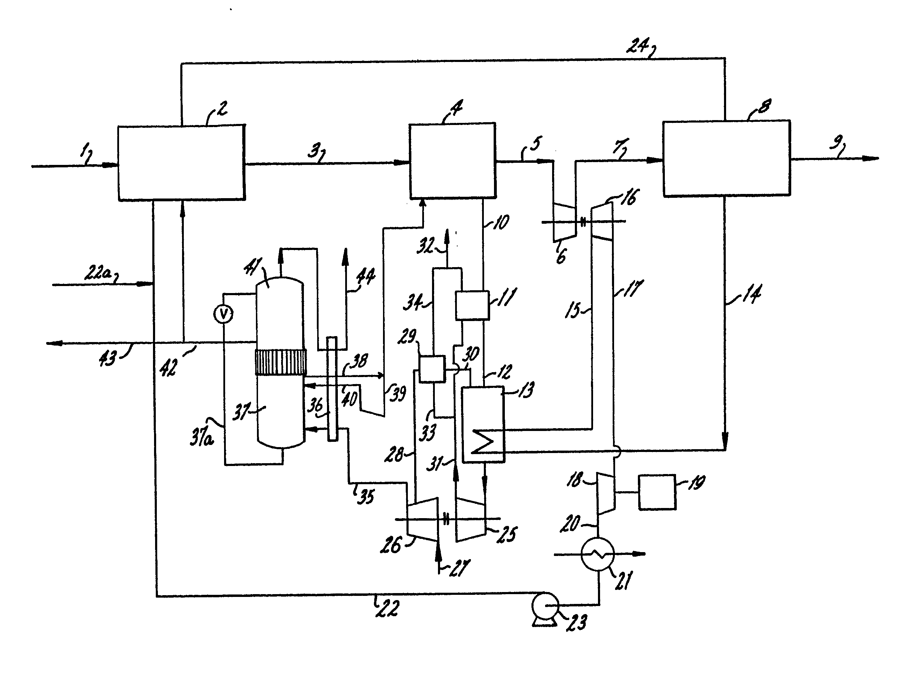

### Brief description of the drawing

The invention is hereinafter further described with reference to the accompanying single figure drawing comprising a schematic representation of an embodiment thereof illustrating the overall integrated system for the production of ammonia.

### Detailed description of the invention

In the practice of the invention, a PSA-hydrogen purification system is employed with nitrogen at elevated pressure being used as purge gas. The purified hydrogen recovered from the system at its higher adsorption pressure is surprisingly and significantly found to contain sufficient nitrogen for use as an ammonia synthesis gas stream. In addition, the effluent purge gas is available at said elevated pressure and is advantageously employed for power generation purposes. In the preferred overall, integrated system of the invention, air being passed to an air separation system is compressed by a compressor. The power for driving the compressor is produced by the expansion of said effluent purge gas to lower pressure. Nitrogen recovered from said air separation system is advantageously employed as said purging gas, while oxygen recovered therein may be employed in a hydrogen generation system in which the hydrogen passed to the PSA-hydrogen purification system is generated. By such use of elevated pressure nitrogen for purging the adsorbent bed and the integration of the overall system to the various degrees herein disclosed and claimed, the invention is capable of achieving the stated objectives in a manner highly desirable and beneficial to the art.

Referring to the drawing, those skilled in the art will appreciate that various major portions of the illustrated embodiment comprise well established, commercial technology benefited by the integration made possible by the practice of the invention. Thus, the basic PSA-hydrogen purification system is well known and established in the art, apart from the novel features as herein described and claimed. Similarly the air separation, hydrogen generation and ammonia synthesis systems employed in the overall integrated embodiments of the invention are well known and established technologies. The beneficial result of the present invention resides, with respect to such known systems, in their integration in a manner contributing significantly to the production of low energy ammonia thereby.

Referring more specifically to the drawing, a feed gas is passed in line 1 to hydrogen generation system 2 from which a hydrogen-containing stream is passed through line 3 to a multiple bed PSA system 4 in which impurities are adsorbed so that a purified hydrogen gas stream is discharged from said system 4 through line 5. As indicated above, the unadsorbed, purified hydrogen stream will contain, in the practice of the invention, nitrogen in amounts advantageous for ammonia synthesis gas purposes. Said hydrogen—nitrogen synthesis gas stream in line 5 is essentially at the adsorption pressure employed in PSA system 4 and is further compressed in compressor 6 before being passed through line 7 to ammonia synthesis unit 8 from which product ammonia is recovered through line 9.

Effluent purge gas removed from PSA system 4 through line 10 at the elevated purge pressure of the invention comprises nitrogen, methane, carbon oxides and hydrogen. It is passed to heat exchanger 11 for preheating therein before being passed through line 12 to combustion chamber 13 wherein it is combined with air and subjected to combustion, thereby generating a source of heat used to superheat steam that passes to said combustion chamber from ammonia synthesis unit 8 through line 14. The superheated steam leaves combustion chamber 13 through line 15 and passes therein to steam turbine 16 that is used to drive said compressor 6.

The exhaust from steam turbine 16 is discharged through line 17 to turbine 18 for expansion therein, providing the power to drive generator 19. The expanded steam leaving turbine 18 is passed through line 20 to heat exchanger 21 for cooling, with process water being passed therefrom in line 22 containing pump 23 for passage, together with make-up water from line 22a, to hydrogen generation system 2. As shown, water is passed from hydrogen generation system 2 through line 24 to ammonia synthesis unit 8 for the generation of said steam that exits from unit 8 through line 14 as noted above.

After preheating in exchanger 11 and combustion in chamber 13, the exhaust gas is passed to gas turbine 25. The exhaust gas is expanded therein, thus generating power to drive air compressor 26 to which air is passed through line 27. A portion of the air compressed in said compressor 26 is passed therefrom through line 28 to exchanger 29 for preheating therein before being passed through line 30 to said combustion chamber 13. The expanded exhaust gas leaving gas turbine 25 is passed through line 31 to heat exchanger 11 for cooling therein against the warming effluent purge gas stream leaving PSA system 4 through line 10. Said cooled exhaust gas is withdrawn from exchanger 11 for discharge to stack line 32. A portion of said expanded exhaust gas in line 31 is diverted, however, for passage through line 33 to said heat exchanger 29. In said exchanger 29, said portion of expanded exhaust gas is cooled against warming compressed air from line 28. The thus-cooled exhaust gas leaves exchanger 29 through line 34 for discharge to said stack line 32.

Compressed air from said compressor 26 is passed in line 35 through heat exchanger 36 to the lower portion of bottom column 37 of an air separation system. This system is operated as a nitrogen column with by-product high purity oxygen. High purity gaseous nitrogen is extracted at the top of lower column 37 through line 38 and passes through said exchanger 36. A portion of said gaseous nitrogen is diverted from said line 38 for passage through compressor 39 and return to column 37 through line 40 passing through said heat exchanger 36. Bottom liquid removed from column 37 through line 37a is subcooled and introduced to the top of upper column 41 of said air separation system 37. High purity oxygen is removed from the lower portion of upper column 41 through line 42 for passage to hydrogen generation system 2, or alternatively, through line 43 for export. Waste gas removed from upper column 41 is conveniently passed in line 44 through heat exchanger 36 for warming therein against cooling streams entering air separation unit 37 prior discharge from the system.

High purity gaseous nitrogen leaving exchanger 36 under pressure in line 38 is passed to PSA system 4 as purging gas completing the overall process of the illustrated embodiment. As described above with reference to the invention, the use of nitrogen at elevated pressure as a purge gas in the PSA-hydrogen system has been found to result in the formation of a highly advantageous ammonia synthesis gas at the higher adsorption pressure employed in said PSA system. For the purpose, the nitrogen purge gas is desirably employed at an elevated purge gas pressure of from 414 to 689 kPa absolute. The higher pressure adsorption pressure is conveniently from 2068 to 6895 kPa absolute or above. Thus, the nitrogen recovered in the ammonia synthesis gas discharged from the PSA system will be recovered at a desirably higher pressure, i.e. at 2068—6895 kPa absolute, than the purge pressure at which the nitrogen is passed to said PSA system, i.e. 414—689 kPa absolute. In addition, the effluent purge gas removed from the system at the elevated purge pressure is usefully applied for power recovery as in turbine 25 of the drawing. As will be appreciated from the description of the illustrated overall, integrated process and system that constitutes a preferred embodiment of the invention, such power recovery can effectively be employed for the air separation system, enhancing the production of said nitrogen for use as purge gas and of oxygen for use in the generation of hydrogen feed gas for the PSA-hydrogen system. Thus, the invention provides a highly desirable integration of the overall ammonia production system, reducing the energy costs associated therewith and improving the highly desirable PSA-hydrogen system that is an essential feature of the overall ammonia production process and apparatus herein disclosed and claimed.

As noted above, the PSA-hydrogen purification system as employed in the practice of the invention employs known, conventional processing cycles apart from the use of elevated pressure nitrogen as the advantageous purge gas. The PSA system comprises a multiple bed system capable of selectively adsorbing impurities from a hydrogen-containing feed gas. Each bed of the system, which preferably contains at least seven beds, e.g., a ten bed system, undergoes the known processing cycle of (1) introduction of feed gas to the bed inlet end at an adsorption pressure of from 2068 to 6895 kPa absolute or above, with adsorption of impurities therefrom and discharge of an unadsorbed, purified hydrogen stream from the discharge end thereof, (2) partial cocurrent depressurization of the bed with release of hydrogen-containing void space gas from the discharge end of the bed, (3) introduction of said released void space gas to the discharge end of another bed that is undergoing repressurization so as to equalize the pressure therebetween, (4) countercurrent depressurization of the bed with release of gas from the inlet end thereof for blowdown of the bed to its lower desorption pressure, (5) introduction of purging gas to the discharge end of the bed at its desorption pressure for the purging thereof, with the discharge of said purging gas from the inlet end of the bed, (6) repressurization of the purged bed to said adsorption pressure, and (7) repetition of said cyclic steps with additional quantities of hydrogen-containing feed gas. Further information relating to such PSA processing can be found, for example, in the Wagner patent, US 3,430,418 and in the Fuderer et al patent, U.S. 3,986,849 that relates specifically to multiple bed systems in which at least seven adsorbent beds are employed. In the practice of the invention, however, nitrogen is passed to the discharge end of each bed, at the appropriate point in its processing cycle, at an elevated purge pressure of from 414 to 689 kPa absolute, with said nitrogen being obtained, in preferred embodiments of the invention, from an air separation system utilizing air compressed by power generated by the effluent purge gas discharged from the PSA system and passed to an expansion turbine essentially at said purge pressure, advantageously with heat exchange and combustion steps that serve to further recover energy values from the effluent purge gas before it is discharged to the stack.

Upon operation of the PSA-hydrogen purification operation as described above, the unadsorbed, purified hydrogen stream withdrawn from each bed, and thus from PSA system 4 of the drawing, at the adsorption pressure contains from 16% to 26% by volume nitrogen, preferably between 20% and 25%, typically about 23%. This nitrogen will be understood to comprise residual amounts of the nitrogen purge gas remaining in the bed upon completion of the purge. The purified hydrogen-nitrogen gas from the PSA system of the invention, therefore, is highly suitable for ammonia synthesis operations, alone or together with the addition of small amounts of additional nitrogen to approximate more closely a 3:1 H/N mixture. As shown in the drawing, the hydrogen—nitrogen gas mixture from PSA system 4 is compressed in compressor 6 since the pressure required for ammonia synthesis is generally greater than that employed for PSA adsorption, e.g., on the order of 13789—27579 kPa gauge. In the overall integrated operation of the invention, compression of the synthesis gas is accomplished by expansion of superheated steam in turbine 16, which drives synthesis gas compressor 6. In turn, said superheated steam is produced in combustion chamber 13 in which the effluent purge gas is subjected to combustion, preferably with air compressed by use of the power generated by the passage of the exhaust gas through turbine 25.

The elevated purge pressure, therefore, produces highly desirable benefits not only in the hydrogen-nitrogen synthesis gas mixture produced in the PSA system, but also in the energy economies flowing from the availability of the effluent purge gas discharged from the PSA system at said elevated pressure.

The hydrogen generation system employed in the practice of the invention can comprise any convenient, commercially available technology. Hydrogen may be produced, for example, by steam reforming of natural gas or naphtha feedstocks, by partial oxidation of hydrocarbon feedstocks, or by coal gasification. Regardless of the type of hydrogen production process employed in any particular application, it will be understood that the hydrogen-containing gas stream produced will typically contain a number of impurities, such as carbon dioxide, carbon monoxide, methane and water. Those skilled in the art will appreciate that various well known, conventional steps may be employed to treat the hydrogen stream prior to final purification in the PSA system of the invention, although such steps are not illustrated in the drawing. Thus, the hydrogen-containing gas may be subjected to carbon monoxide shift conversion for removal of carbon monoxide, carbon dioxide removal by suitable selective solvents, etc. before passage to the PSA system for final purification of the hydrogen to be used for ammonia synthesis.

In a particularly desirable hydrogen generation system, a major portion, e.g., about 60—70%, of a hydrocarbon feed stream can be subjected to catalytic steam reforming in the reformer tubes of a primary reformer, with the hot effluent optionally being passed to a secondary reforming zone for reaction of unconverted hydrocarbon present in the reformed gas mixture with air or oxygen. The heat required for convention primary reforming is usually supplied by burning a fluid hydrocarbon fuel with air in the primary reforming zone external to the catalyst-filled reformer tubes therein. The hot effluent from said primary or secondary reforming operations is thereafter mixed with the hot effluent from the catalytic steam reforming of the remaining portion of the feed discharged from the reformer tubes of a primary reformer-exchanger. The combined effluent is passed on the shell side of the reformer-exchanger countercurrently to the passage of feed in the reformer tubes of the reformer-exchanger, thus supplying the heat for the reforming of the portion of the feed passed through the reformer tubes of the reformer-exchanger unit. Alternatively, the major portion of the hydrocarbon feed stream can be subjected to partial oxidation, e.g., using the oxygen from the air separation system of the invention, with the remainder of the feed stream being processed in the reformer-exchanger unit, utilizing the heat of the combined effluent streams on the shell side of the reformer-exchanger as described above.

The air separation system of the invention is operated as a nitrogen column with by-product high purity oxygen, said system being simpler than the typical large air separation plant. The upper column thus needs no nitrogen purification section and no liquid nitrogen reflux. Compared to the same capacity conventional oxygen plant, the diameter of the lower column will likely be over 20% larger, but the diameter of the upper column can be about 10% smaller. The number of trays in the upper column can be reduced since there is no nitrogen recovery section therein. Oxygen recovery is about 67% in such a system, and the waste gas contains about 16% oxygen. Such an air separation system is not, in itself, new. Its use to furnish nitrogen from the lower column at elevated pressure for PSA purge purposes represents a desirable embodiment of the overall process for achieving energy savings in addition to enhanced ammonia synthesis gas production. It will be understood that the air separation system may be operated in other known embodiments, as by the production of lower pressure nitrogen, e.g., 103 kPa absolute from the top of the upper column, with said nitrogen thereafter being pressurized to the desired purge pressure by suitable compressor means. The extraction of nitrogen from the lower column of the air separation plant or system, at elevated pressure, accepts a lower oxygen production than in the conventional air separation plant, but simplifies the nitrogen compression requirements for the purging gas to the PSA system.

It will be understood that various other changes and modifications can be made in the various aspects of the invention, as described and illustrated with respect to particular embodiments, without departing from the scope of the invention as recited in the appended claims. For example, the effluent purge gas discharged from the PSA system in the illustrated embodiment is preheated, e.g., to from 300°C to 600°C, prior to passage to an expansion turbine for power generation purposes. The drawing also shows the preheated gas passing to a combustion zone prior to passage to said turbine. The exhaust gas from the combustion chamber was shown as being cooled, as for example to 600—1,000°C, before entering the expansion turbine. The heat removed from the exhaust gas is conveniently used to generate steam from feedwater and/or to superheat steam as was shown in the drawing. It will be appreciated that the preheated effluent purge gas may also be expanded in the turbine prior to combustion with oxygen or air, or an oxygen-rich gas. In this latter embodiment, the heat generated in the combustion zone can be used to generate steam, as by the passage of feed water through the combustion zone. The available heat can of course, be utilized in any other convenient manner to improve the energy efficiency of the overall ammonia production operation. As was illustrated in the drawing, the effluent purge gas, after being preheated and passed to the combustion zone and the expansion turbine, regardless of the sequence employed, is desirably cooled in heat exchangers against the warming compressed air stream passing to the combustion zone and the warming effluent purge gas passing from the PSA system to said combustion zone and expansion turbine.

It is within the scope of the invention to extract oxygen from the air separation system either in gaseous or in liquid form for use in the hydrogen generation system or for other purposes. When gaseous oxygen is extracted, it is thereafter compressed in an oxygen compressor to the pressure required for use in the hydrogen generation unit, generally on the order of 3447—6895 kPa absolute. Alternately, the air separation unit can be operated so that sufficient nitrogen is compressed to a higher pressure, e.g., between 2068 and 6895 kPa absolute, liquified and recycled back to the lower column to allow extraction of liquid oxygen from the lower column. This liquid oxygen can then be pumped to the high pressure required in the hydrogen generation system, e.g. 2758—8274 kPa absolute, thus making it unnecessary to employ an oxygen compressor.

The oxygen obtained from the air separation unit, in whatever form, is advantageously employed to supply the oxygen requirements of the various alternate types of hydrogen generation units that may be employed in the practice of the invention. Thus, the oxygen may be supplied to partial oxidation of coal gasification type hydrogen generation systems. The oxygen may also be used for secondary reforming in hydrogen generation units employing both primary and secondary reforming of the hydrocarbon feed material. It will be readily apparent that part of the gaseous or liquid oxygen extracted may be used for hydrogen generation, with the remainder of the available oxygen being exported for other purposes. It is also within the scope of the invention to utilize an argon purification column to separate and export argon from the air separation unit.

Those skilled in the art will appreciate that various other modifications can be made in various aspects of the overall process and apparatus without departing from the scope of the invention. Secondary reforming of the feed gas with oxygen reduces the size of the primary reformer and the heat requirements hereof, and the bypassing of a part of said feed gas, e.g., 30—40% thereof, around the primary reformer for introduction directly to the secondary reformer, together with primary reforming effluent, enables a substantial saving in the dilution steam requirements of the hydrogen generation operation. In other embodiments, a partial oxidation unit may conveniently be employed together with a reformer exchanger unit as referred to above. In the air separation system, it is also feasible to compress one part of the air being passed to said system to, for example, 552—689 kPa absolute, while another part thereof is compressed, for example, to 2065—6205 kPa absolute. The air compressed to the higher pressure is thereby liquified and introduced to the air separation system as a liquid, thereby facilitating the extraction of liquid oxygen from said system. The liquified oxygen extracted from the system can thereafter be pumped, as was initiated above, to high pressure making unnecessary the use of an oxygen gas compressor.

In an illustrative example of the practice of the invention utilizing the overall, integrated embodiment of the drawing, methane feed gas is conveniently passed to a partial oxidation hydrogen generation unit for reaction therein with oxygen recovered from the air separation unit. The hydrogen-containing gas stream generated will generally contain from 60 to 75% hydrogen, together with about 25% carbon dioxide and small amounts of carbon monoxide and methane. The gas stream is passed to a conventional initial purification system such as a liquid solvent wash column, not shown in the drawing, from which the hydrogen-containing stream is passed to, e.g., a ten bed, PSA system for final purification. In accordance with the invention, nitrogen at, e.g., 552 kPa absolute is employed as purge gas in the PSA processing cycle. The purified hydrogen recovered from the PSA system is found to contain about 23% nitrogen as a result of the use of nitrogen under such elevated purge pressure conditions. The purified hydrogen-nitrogen gas stream is thus an advantageous ammonia synthesis gas that is compressed to synthesis pressure, e.g. 20684 kPa absolute, and converted to ammonia product gas. Power for compression of the synthesis gas is furnished by a steam turbine driven by superheated steam generated from the heat recovered from the impurity-containing effluent purge gas discharged from the PSA system. The effluent purge gas is initially preheated against expanded exhaust gas being discharged to the stack. The preheated effluent purge gas at about 517 kPa absolute is passed to a combustion zone where it is subjected to combustion at 1200—1300°C with compressed air. The heat generated thereby is used to superheat said steam used to drive the steam turbine supplying the power for the compressor used to compress said ammonia synthesis gas recovered from the PSA system. The exhaust gas leaving the combustion zone at, e.g., 510 kPa absolute and 740°C, is expanded in a gas turbine and discharged to the stack after passing through heat exchangers to warm compressed air being passed to the combustion zone and the effluent purge gas passing from the PSA system to the combustion zone. The power generated in the gas turbine is used to drive an air compressor from which air is obtained at e.g. 689 kPa absolute. A portion of the compressed air is preheated and passed to said combustion zone, while the remainder is passed to an air separation unit adapted to produce nitrogen gas at what 552 kPa absolute for use as the purging gas in the PSA unit. Waste gas from the air separation unit at, e.g., −184°C, can be used to cool compressed air entering the separation unit at the bottom of the lower column maintained at about −162°C. Liquid oxygen extracted from the system is passed at, for example, 4137 kPa absolute to the partial oxidation unit for reaction with additional quantities of methane feed gas. For further energy recovery, the steam leaving the steam turbine used for driving the synthesis gas compressor at about 483 kPa absolute is further expanded to generate power and is cooled to condense process water that can be used for cooling, boiler feed purposes and the like.

The effluent purge gas obtained from the PSA unit in the practice of the invention can be efficiently employed for power generation purposes. This effluent purge gas, which contains hydrogen, methane and carbon oxides as well as nitrogen, is available at elevated pressure and, in the illustrative example, is subjected to combustion and expanded in a gas turbine for power generation purposes. In the example based on a 1,000 ton per day ammonia plant, gas turbine power of 15,000 kW can be obtained. Such power is conveniently employed, as in the example, to drive the compressor for compressing air used both for effluent purge gas combustion and for treatment in the air separation unit. In turn, the nitrogen obtained therefrom is used as the nitrogen purge gas at elevated pressure. Extracted oxygen is likewise employed in the overall process and system upon passage to the hydrogen generation unit from which the hydrogen-containing feed gas to the PSA unit is obtained. Because of these overall economics, the invention is able to provide pure synthesis gas and product ammonia at lower energy costs than can be obtained by other technologies presently available in the art. Thus, the most competitive alternate processes require at least about 5 to 10% more feed and fuel than is required for the advantageous production of ammonia in the practice of the invention. The elevated pressure nitrogen purge likewise enables the design of the PSA system to be simplified as a result of the lower pressure drop across the adsorbent beds. Such enhancement of the PSA system and the desirable production of an effective ammonia synthesis gas therefrom at the adsorption pressure of the system contribute significantly to the overall benefits of the invention and the highly desirable use of the pressure swing adsorption process for ammonia production.

## Claims

1. A process for the production of ammonia comprising:

(a) passing a hydrogen-containing feed gas at an adsorption pressure of from 2068 to 6895 kPa absolute to a multiple bed pressure swing adsorption system capable of selectively adsorbing impurities from said hydrogen, each bed of said system undergoing the processing cycle of:

   (i) introduction of feed gas to the bed inlet end at said adsorption pressure, with adsorption of impurities therefrom and discharge of an unadsorbed, purified hydrogen stream from the discharge end thereof;

   (ii) partial cocurrent depressurization of the bed with release of hydrogen—containing void space gas from the discharge end of the bed;

   (iii) production of said released void space gas to the discharge end of an adsorption bed undergoing repressurization to equalize the pressure therebetween;

   (iv) countercurrent depressurization of the bed with release of gas from the inlet end thereof for blowdown to its lower desorption pressure;

   (v) introduction of purge gas to the discharge end of the bed at its desorption pressure for the purging thereof, with the discharge of said purge gas from the inlet end of the bed, and

   (vi) repressurization of the purged bed to said adsorption pressure, and

   (vii) repetition of said cyclic steps (i)—(vi) with additional quantities of feed gas;

(b) passing nitrogen to the discharge end of each bed as said purging gas at an elevated purge pressure of from 414 to 689 kPa absolute, the unadsorbed, purified hydrogen stream, withdrawn from each bed at said adsorption pressure during the next succeeding adsorption step containing from 16% to 26% by volume nitrogen, said nitrogen comprising residual amounts of purge gas remaining in the bed upon completion of said purge; and

(c) synthesizing ammonia from said purified hydrogen-nitrogen gas discharged from said adsorption system.

2. A process as claimed in claim 1, including expanding the effluent purge gas discharged from the inlet end of the bed at said pressure of from 414 to 689 kPa absolute in an expansion turbine, thereby generating power.

3. A process as claimed in claim 2, in which said effluent purge gas is expanded to about atmospheric pressure.

4. A process as claimed in any of claims 2 and 3, including heating said effluent purge gas prior to passage to the expansion turbine.

5. A process as claimed in claim 4, in which said effluent purge gas is preheated to from 300°C to 600°C.

6. A process as claimed in any of claims 4 and 5, in which said preheated and expanded effluent purge gas is combined with air, oxygen or oxygen-rich gas in a combustion zone and subjected to combustion, thereby generating a source of heat.

7. A process as claimed in claim 6, including heating said effluent purge gas by indirect heat exchange with said combustion zone exhaust gas prior to passage of said effluent purge gas to the expansion turbine.

8. A process as claimed in any of claims 6 and 7, including heating said air, oxygen or oxygen-rich gas by indirect heat exchange with said combustion zone exhaust gas prior to passage to the combustion zone.

9. A process as claimed in any of claims 4 and 5, in which said preheated effluent purge gas is combined with air, oxygen or oxygen-rich gas in a combustion zone and subjected to combustion prior to passage to said expansion turbine.

10. A process as claimed in claim 9, including heating said effluent purge gas by indirect heat exchange with said exhaust gas leaving the expansion-turbine prior to passage of said purge gas to the combustion zone.

11. A process as claimed in any of claims 9 and 10, including heating air, oxygen or oxygen-rich gas by indirect heat exchange with said exhaust gas leaving the expansion turbine prior to passage to the combustion zone.

12. A process as claimed in any of claims 6 to 11, including passing feed water or steam through said combustion zone, thereby generating or superheating steam.

13. A process as claimed in claim 12, including passing said superheated steam to a steam turbine-compressor unit for expansion therein, said steam turbine driving the compressor, thereby compressing said purified hydrogen-nitrogen gas prior to the synthesis of ammonia therefrom.

14. A process as claimed in any of claims 2 to 5, including driving an air compressor with said power generated by the passage of effluent purge gas through said expansion turbine.

15. A process as claimed in any of claims 6 to 8, including driving an air compressor with said power generated by the passage of effluent purge gas through said expansion turbine.

16. A process as claimed in any of claims 9 to 13, including driving an air compressor with said power generated by the passage of exhaust gas through said expansion turbine.

17. A process as claimed in claim 15, in which a portion of the air compressed by the power generated by the passage of effluent purge gas through said expansion turbine is employed for said combustion of the effluent purge gas.

18. A process as claimed in claim 16, in which a portion of the air compressed by the power generated by the passage of exhaust gas through said expansion turbine is employed for said combustion of the effluent purge gas.

19. A process as claimed in any of claims 14 to 18, including passing compressed air from said compressor to a double column air separation system.

20. A process as claimed in claim 19, in which nitrogen produced in said air separation system is employed as said purging gas passed to the pressure swing adsorption system at elevated purge pressure.

21. A process as claimed in claim 20, in which nitrogen is extracted from the lower column of said air separation system as elevated pressure purge gas.

22. A process as claimed in claim 20, in which relatively low pressure nitrogen is recovered from the top of the upper column and is pressurized to said purge pressure.

23. A process as claimed in any of claims 19 to 22, including passing oxygen produced in said air separation system to a hydrogen generation system for use in the oxidation of hydrocarbons to produce said hydrogen-containing feed gas for the pressure swing adsorption system.

24. A process as claimed in claim 23, including recovering nitrogen from the top of the upper column of said air separation system, compressing it to a pressure of from 2068 to 6895 kPa absolute, liquefying and recycling it back to the lower column of said air separation system, and extracting liquid oxygen from the upper column and pumping said oxygen to the pressure required in the hydrogen generation system.

25. A process as claimed in claim 23, in which a portion of the air being passed to the air separation system is compressed to from 552 to 689 kPa absolute, the remaining portion thereof being compressed to from 2068 to 6205 kPa absolute, said air compressed to the higher pressure being liquefied and introduced to the air separation system as a liquid, thereby enabling liquid oxygen to be extracted from said system, and pumping said liquid oxygen to the pressure required in the hydrogen generation system.

26. A process as claimed in claim 23, in which said oxygen is extracted from the air separation system as gaseous oxygen and including compressing said oxygen to the pressure required in the hydrogen generation system.

27. A process as claimed in any of claims 23 to 26, in which only a portion of the oxygen produced in either gaseous or liquid form is passed to the said hydrogen generation system.

28. A process as claimed in any of claims 19 to 27, including passing said air to be separated to an argon removal column and exporting separated argon from the air separation system.

29. A process as claimed in any of claims 23 to 28, in which said hydrogen generation system comprises a partial oxidation system.

30. A process as claimed in any of claims 23 to 28, in which said hydrogen generation system comprises a coal gasification system.

31. A process as claimed in any of claims 23 to 28, in which said hydrogen generation system comprises a primary and a secondary reforming system, said oxygen being employed for said secondary reforming.

32. A process as claimed in claim 31, in which said hydrogen generation system comprises a primary and a secondary reforming system, and including by passing a portion of the hydrocarbon feed directly to said secondary reforming system for reaction with oxygen therein.

33. A process as claimed in any of claims 23 to 28, in which said hydrogen generation system comprises a partial oxidation unit and a reformer-exchanger unit, a portion of the hydrocarbon feed passing directly to said reformer-exchanger unit.

34. A process as claimed in claim 33, in which said hydrogen generation system comprises a steam reforming system including a primary reforming unit, a secondary reforming unit and a reformer exchanger unit, said oxygen being employed in the secondary reforming unit, a portion of the hydrocarbon feed being passed directly to said reformer-exchanger unit.

35. An apparatus for the production of ammonia comprising:

(a) a multiple bed pressure swing adsorption system capable of selectively adsorbing impurities from a hydrogen feed gas;

(b) an air separation system adapted to provide nitrogen at an elevated purge gas pressure to said pressure swing adsorption system;

(c) conduit means for discharging a purified hydrogen-nitrogen ammonia synthesis gas from said pressure swing adsorption system;

(d) an ammonia synthesis reaction zone for converting said ammonia synthesis gas to product ammonia;

(e) conduit means for withdrawing effluent purge gas containing said impurities from the pressure swing adsorption system at said elevated pressure; and

(f) expansion turbine means for expanding said effluent purge gas.

36. An apparatus as claimed in claim 35, including air compression means driven by said expansion turbine means.

37. An apparatus as claimed in claim 36, including means for passing compressed air from said air compression means to said air separation system.

38. An apparatus as claimed in any of claims 36 and 37, including means for extracting oxygen from said air separation system.

39. An apparatus as claimed in any of claims 36 and 37, including a hydrogen generation system for generating a hydrogen feed stream for passage to said pressure swing adsorption system.

40. An apparatus as claimed in claim 39, in which said hydrogen generation system comprises a partial oxidation system.

41. An apparatus as claimed in claim 40, including a reformer-exchanger unit, and means for passing a portion of the feed to said system to said reformer-exchanger unit.

42. An apparatus as claimed in claim 39, in which said hydrogen generation system comprises a coal gasification system.

43. An apparatus as claimed in claim 39, including means for extracting oxygen from said air separation system.

44. An apparatus as claimed in claim 43, in which said means for extracting oxygen includes means for passing said oxygen to said hydrogen generation system.

45. An apparatus as claimed in claim 44, in which said hydrogen generation system comprises a primary and secondary steam reforming system, said oxygen being passed to said secondary reforming system.

46. An apparatus as claimed in claim 45, including a reformer-exchanger unit, and means for passing a portion of the feed stream to said reformer-exchanger unit.

47. An apparatus as claimed in any of claims 36 to 46, including heat exchanger means for preheating the effluent purge gas prior to passage thereof to said expansion turbine means.

48. An apparatus as claimed in any of claims 36 to 47, including a combustion zone for subjecting said effluent purge gas to combustion.

49. An apparatus as claimed in claim 48, in which said combustion zone is positioned prior to the passage of said effluent purge gas to said expansion turbine means.

50. An apparatus as claimed in any of claims 48 and 49, including means for passing compressed gas from said air compression means to said combustion zone.

51. An apparatus as claimed in claim 50, including heat exchanger means adapted for cooling said exhaust gas after expansion in said gas turbine, and for heating said compressed air being passed to said combustion zone and said effluent purge gas withdrawn from the pressure swing adsorption system.

52. An apparatus as claimed in any of claims 48 to 51, including steam turbine-compressor means for compressing the purified hydrogen-nitrogen synthesis gas to the pressure required for ammonia synthesis, said steam turbine being driven by steam generated and/or superheated by heat from said combustion zone.

### Patentansprüche

1. Verfahren zur Herstellung von Ammoniak mit den Schritten:

(a) Zuführen eines wasserstoffhaltigen Speisegases bei einem absoluten Adsorptionsdruck von 2068 bis zu 6895 kPa zu einem Mehrfachbett-Pendeldruckadsorptionssystem, welches geeignet ist, selektiv Verunreinigungen aus diesem Wasserstoffgas zu entfernen, wobei jedes Bett folgendem Verfahrenszyklus unterliegt:

(i) Einführen von Speisegas in das Einlaßende des Bettes bei dem Adsorptionsdruck unter Adsorption von Verunreinigungen aus dem Speisegas und Abführen eines nichtabsorbierten gereinigten Wasserstoffstromes aus dem Austrittsende des Bettes;

(ii) teilweise Gleichstrom-Druckentlastung des Bettes unter Freisetzen von wasserstoffhaltigem Zwischenraum—Gas aus dem Austrittsende des Bettes;

(iii) Zuführen des freigesetzten Zwischenraum-Gases zum Austrittsende eines Adsorptionsbettes, welches einer Wiederunterdrucksetzung unterliegt, um den Druck dazwischen auszugleichen;

(iv) Gegenstrom-Druckentlastung des Bettes durch Freisetzen von Gas aus dem Einlaßende des Bettes, um auf dessen niedrigeren Desorptionsdruck zu entspannen;

(v) Einführung von Spülgas in das Austrittsende des Bettes bei dessen Desorptionsdruck zur Reinigung des Bettes, unter Ableiten des Spülgases aus dem Einlaßende des Bettes, und

(vi) Wiederunterdrucksetzung des gereinigten Bettes auf den Adsorptionsdruck, und
(vii) Wiederholung der Verfahrens-Schritte (i)—(vi) mit weiteren Volumina von Speisegas;

(b) Zuströmenlassen von Stickstoff als Spülgas zum Austrittsende jedes Bettes unter einem erhöhten Reinigungsdruck von 414 bis 689 kPa absolut, wobei der Strom des nicht absorbierten gereinigten Wasserstoffgases, der von jedem Bett bei Adsorptionsdruck während des nächstfolgenden Adsorptionsschrittes abgezogen wird, 16 bis 28 Vol.-% Stickstoff enthält, welcher restliche Mengen von Spülgas aufweist, welches bei Ende der Reinigung im Bett zurückbleibt; und
. (c) Synthetisieren von Ammoniak aus diesem gereinigten Wasserstoff-Stickstoff-Gas, das dem Absortionssystem entnommen wird.

2. Verfahren nach Anspruch 1, gekennzeichnet durch Expandieren des ausströmenden Spülgases, welches dem Einlaßende des Bettes bei dem Druck von 414 bis 689 kPa entnomm en wird, in einer Expansionsturbine, um dabei Energie zu erzeugen.

3. Verfahren nach Anspruch 2, dadurch gekennzeichnet, daß das ausströmende Spülgas etwa auf atmosphärischen Druck expandiert wird.

4. Verfahren nach einem der Ansprüche 2 oder 3, gekennzeichnet durch Erhitzen des ausströmenden Spülgases vor Weiterleitung zur Expansionsturbine.

5. Verfahren nach Anspruch 4, dadurch gekennzeichnet, daß ausströmendes Spülgas auf Temperaturen von 300 bis 600°C vorgeheizt wird.

6. Verfahren nach einem der Ansprüche 4 oder 5, dadurch gekennzeichnet, daß das vorgeheizte und expandierte ausströmende Spülgas mit Luft, Sauerstoff oder sauerstoffreichem Gas in einer Verbrennungszone zusammengeführt und einer Verbrennung unterworfen wird, um dadurch eine Wärmequelle zu erzeugen.

7. Verfahren nach Anspruch 6, gekennzeichnet, durch Vorheizen des ausströmenden Spülgases durch indirekten Wärmeaustausch mit dem Abgas aus der Verbrennungszone vor der Weiterleitung des Spülgases zur Expansionsturbine.

8. Verfahren nach einem der Ansprüche 6 oder 7, gekennzeichnet, durch Erwärmen der Luft, des Sauerstoffs oder des sauerstoffreichen Gases durch indirekten Wärmeaustausch mit dem Abgas aus der Verbrennungszone vor Weiterleitung zur Verbrennungszone.

9. Verfahren nach einem der Ansprüche 4 oder 5, dadurch gekennzeichnet, daß das vorgeheizte ausströmende Spülgas in einer Verbrennungszone mit Luft, Sauerstoff oder sauerstoffreichem Gas zusammengebracht und vor Weiterleitung zu der Expansionsturbine einer Verbrennung unterworfen wird.

10. Verfahren nach Anspruch 9, gekennzeichnet durch Erwärmen des ausströmenden Reinigungsgases durch indirekten Wärmeaustausch mit dem Abgas, welches die Expansionsturbine verläßt, vor der Weiterleitung des Spülgases zu der Verbrennungszone.

11. Verfahren nach einem der Ansprüche 9 oder 10, gekennzeichnet, durch Erwärmen der Luft, des Sauerstoffes oder des sauerstoffreichen Gases durch indirekten Wärmeaustausch mit dem Abgas, welches die Expansionsturbine verläßt, vor Weiterleitung zu der Verbrennungszone.

12. Verfahren nach einem der Ansprüche 6 bis 11, gekennzeichnet durch das Durchleiten von Speisewasser oder Dampf durch die Verbrennungszone zum Erzeugen oder Überhitzen von Dampf.

13. Verfahren nach Anspruch 12, gekennzeichnet durch Zuleiten des überhitzten Dampfes zu einer Dampfturbinenkompressor-Einheit zur Expansion in derselben, wobei die Dampfturbine den Kompressor betreibt, welcher seinerseits das gereinigte Wasserstoff-Stickstoff-Gas vor der Ammoniaksynthese komprimiert.

14. Verfahren nach einem der Ansprüche 2 bis 5, gekennzeichnet durch Betreiben eines Luftkompressors mit der Energie, die durch den Durchtritt des ausströmenden Spülgases durch die Expansionsturbine erzeugt wird.

15. Verfahren nach einem der Ansprüche 6 bis 8, gekennzeichnet durch Betreiben eines Luftkompressors mit der Energie, die durch den Durchtritt des ausströmenden Reinigungsgases durch die Expansionsturbine erzeugt wird.

16. Verfahren nach einem der Ansprüche 9 bis 13, gekennzeichnet durch Betreiben eines Luftkompressors mit der Energie, die durch den Durchtritt des Abgases durch die Expansionsturbine erzeugt wird.

17. Verfahren nach Anspruch 15, dadurch gekennzeichnet, daß ein Teil derjenigen Luft, die durch die Energie komprimiert wird, welche durch den Durchtritt des ausströmenden Spülgases durch die Expansionsturbine erhalten wird, für die Verbrennung des ausströmenden Spülgases verwendet wird.

18. Verfahren nach Anspruch 16, dadurch gekennzeichnet, daß ein Teil derjenigen Luft, die durch die Energie komprimiert wird, die durch den Durchtritt des Abgases durch die Expansionsturbine erhalten wird, für die Verbrennung des ausströmenden Spülgases verwendet wird.

19. Verfahren nach einem der Ansprüche 14 bis 18, gekennzeichnet durch Zuleiten der komprimierten Luft aus dem Kompressor zu einem Zweisäulen-Luftzerlegungssystem.

20. Verfahren nach Anspruch 19, dadurch gekennzeichnet, daß der Stickstoff, der in dem Luftzerlegungssystem erhalten wurde, als das Spülgas eingesetzt wird, das bei erhöhtem Reinigungsgas-Druck in das Pendeldruckadsorptionssystem eingeleitet wird.

21. Verfahren nach Anspruch 20, dadurch gekenzeichnet, daß der Stickstoff aus der unteren Säule des Luftzerlegungssystem als höherverdichtetes Reinigungsgas abgezogen wird.

22. Verfahren nach Anspruch 20, dadurch gekennzeichnet, daß der Stickstoff unter relativ niedrigem Druck vom Kopf der oberen Säule zurückgewonnen und auf den Druck des Reinigungsgases gebracht wird.

23. Verfahren nach einem der Ansprüche 19 bis 22, gekennzeichnet durch Zuleiten von Sauerstoff, der in dem Luftzerlegungssystem hergestellt wird zu einem System zur Wasserstoffherstellung zur Verwendung bei der Oxidation von Kohlenwasserstoffen, um das Wasserstoff enthaltende Speisegas für das Pendeldruckadsorptionssystem herzustellen.

24. Verfahren nach Anspruch 23, gekennzeichnet durch Wiedergewinnung von Stickstoff vom Kopf der oberen Säule des Luftzerlegungssystems, dessen Verdichten auf einen Druck von 2068 bis 6895 kPa absolut, Verflüssigung und Rückführung des Stickstoffs zur niedrigeren Säule des Luftzerlegungssystems, und Abziehen von flüssigem Sauerstoff von der oberen Säule sowie Verdichten des Sauerstoffs auf den Druck der in dem System zur Wasserstofferzeugung benötigt wird.

25. Verfahren nach Anspruch 23, dadurch gekennzeichnet, daß ein Teil derjenigen Luft, die dem Luftzerlegungssystem zugeführt wurde, auf einen Druck von 552 bis 689 kPa absolut komprimiert wird, der verbleibende Anteil auf einen Druck von 2086 bis 6205 kPa absolut komprimiert wird, diese auf höheren Druck komprimierte Luft verflüssigt und als eine Flüssigkeit in das Luftzerlegungssystem eingeführt wird, wodurch das Abziehen von flüssigem Sauerstoff aus diesem System ermöglicht wird, sowie Komprimieren des flüssigen Sauerstoffs auf denjenigen Druck, der in dem System zur Wasserstoff-Darstellung benötigt wird.

26. Verfahren nach Anspruch 23, dadurch gekennzeichnet, daß der Sauerstoff aus dem Luftzerlegungssystem als gasförmiger Sauerstoff extrahiert wird, und daß dieser Sauerstoff auf denjenigen Druck komprimiert wird, der in dem System zur Wasserstoff-Darstellung benötigt wird.

27. Verfahren nach einem der Ansprüche 23 bis 26, dadurch gekennzeichnet, daß nur ein Teil des Sauerstoffes, der entweder in gasförmiger oder in flüssiger Form erzeugt wurde, in das System zur Wasserstoff-Darstellung eingeleitet wird.

28. Verfahren nach einem der Ansprüche 19 bis 27, gekennzeichnet durch Zuleiten der zu trennenden Luft zu einer Argon-Abscheidungssäule und durch Austragen abgetrennten Argons aus dem Luftzerlegungssystem.

29. Verfahren nach einem der Ansprüche 23 bis 28, dadurch gekennzeichnet, daß das System zur Wasserstoff-Darstellung ein Partial-Oxidationssystem umfaßt.

30. Verfahren nach den Ansprüchen 23 bis 28, dadurch gekennzeichnet, daß das System zur Wasserstoff-Darstellung ein System zur Kohlevergasung umfaßt.

31. Verfahren nach einem der Ansprüche 23 bis 28, dadurch gekennzeichnet, daß das System zur Wasserstoff-Darstellung ein primäres sowie ein sekundäres Reforming-System umfaßt und daß der Sauerstoff für das sekundäre Reforming-System benutzt wird.

32. Verfahren nach Anspruch 31, dadurch gekennzeichnet, daß das System zur Wasserstoff-Darstellung ein primäres und ein sekundäres Reforming-System umfaßt, sowie durch das Vorbeiführen eines Teils der Kohlenwasserstoff - Speisung direkt zum zweiten Reforming-System, um dort mit dem Sauerstoff zu reagieren.

33. Verfahren nach einem der Ansprüche 23 bis 28, dadurch gekennzeichnet, daß das System zur Wasserstoff-Darstellung eine Partial-Oxidations-Einheit und eine Reformer-Austauscher-Einheit umfaßt, wobei ein Teil der Kohlenwasserstoff-Speisung direkt in die Reformer-Austauscher-Einheit eingeleitet wird.

34. Verfahren nach Anspruch 33, dadurch gekennzeichnet, daß das System zur Wasserstoff-Darstellung ein Dampf-Reforming-System umfaßt, welches eine primäre Reforming-Einheit, eine sekundäre Reforming-Einheit und eine Reformer-Austauscher-Einheit einschließt, wobei der Sauerstoff in der sekundären Reforming-Einheit verwandt wird, und ein Teil der Kohlenwasserstoff - Speisung direkt in die Reformer-Austauscher-Einheit eingeleitet wird.

35. Vorrichtung zum Herstellen von Ammoniak mit:

(a) einem Mehrfachbett-Pendeldruckadsorptionssystem, welches dazu geeignet ist, selektiv Verunreinigungen aus dem Wasserstoff-Speisegas zu adsorbieren;

(b) einem Luftzerlegungssystem, welches dazu bestimmt ist, Stickstoff mit einem erhöhten Spülgasdruck für das Pendeldruckadsorptionssystem zur Verfügung zu stellen;

(c) Leitungsmitteln zum Entnehmen eines gereinigten Wasserstoff-Stickstoff-Gases zur Ammoniaksynthese aus dem Pendeldruckadsorptionssystem;

(d) einer Ammoniak-Synthese-Zone zur Umwandlung des Ammoniaksynthesegases in das Produkt Ammoniak;

(e) Leitungsmitteln zum Abziehen von ausströmendem Spülgas, welches die Verunreinigungen aus dem Pendeldruckadsorptionssystem bei dem erhöhten Druck enthält;

(f) einer Expansionsturbine-Einrichtung, um das ausströmende Spülgas zu expandieren.

36. Vorrichtung nach Anspruch 35, gekennzeichnet durch eine Luftverdichtungseinrichtung, welche durch die Expansionsturbinen-Einrichtung angetrieben wird.

37. Vorrichtung nach Anspruch 36, gekennzeichnet durch eine Einrichtung zum Weiterleiten von komprimierter Luft aus der Luftverdichtungseinrichtung in das Luftzerlegungssystem.

38. Vorrichtung nach einem der Ansprüche 36 und 37, gekennzeichnet durch eine Einrichtung zum Abziehen von Sauerstoff aus dem Luftzerlegungssystem.

39. Vorrichtung nach einem der Ansprüche 36 und 37, gekennzeichnet, durch ein System zur Darstellung von Wasserstoff, um einen Strom vom Wasserstoff-Speisegas zum Einleiten in das Pendeldruckadsorptionssystem herzustellen.

40. Vorrichtung nach Anspruch 39, dadurch gekennzeichnet, daß das System zur Wasserstoff-Darstellung ein Partial-Oxidations-System umfaßt.

41. Vorrichtung nach Anspruch 40, gekennzeichnet durch eine Reformer-Austauscher-Einheit und eine Einrichtung zum Zuleiten eines Teils der Speisung zu dem System, und zwar in die Reformer-Austauscher-Einheit.

42. Vorrichtung nach Anspruch 39, dadurch gekennzeichnet, daß das System zur Wasserstoff-Darstellung ein System zur Kohlevergasung aufweist.

43. Vorrichtung nach Anspruch 39, gekennzeichnet durch eine Einrichtung zum Abziehen von Sauerstoff aus dem Luftzerlegungssystem.

44. Vorrichtung nach Anspruch 43, dadurch gekennzeichnet, daß die Einrichtung zur Extraktion von Sauerstoff eine Einrichtung aufweist, die den Sauerstoff dem System zur Wasserstoff-Darstellung zuleitet.

45. Gerät nach Anspruch 44, dadurch gekennzeichnet, daß das System zur Wasserstoff-Darstellung ein primäres und ein sekundäres Dampf-Reforming-System umfaßt, wobei der Sauerstoff in das sekundäre Reforming-System eingeleitet wird.

46. Vorrichtung nach Anspruch 45, gekennzeichnet durch eine Reformer-Austauscher-Einheit sowie eine Einrichtung zum Zuleiten eines Teils des Speisegas-Stromes zur Reformer-Austauscher-Einheit.

47. Vorrichtung nach einem der Ansprüche 36 bis 46, gekennzeichnet durch eine Wärmeaustauscheinrichtung zum Vorheizen des ausströmenden Spülgases vor dessen Zuleitung zu der Expansionsturbinen-Einrichtung.

48. Vorrichtung nach einem der Ansprüche 6 bis 47, gekennzeichnet durch eine Verbrennungszone zur Verbrennung des ausströmenden Spülgases.

49. Vorrichtung nach Anspruch 48, dadurch gekennzeichnet, daß die Verbrennungszone vor dem Durchtritt des ausströmenden Spülgases durch die Vorrichtungen der Expansionsturbine angeordnet ist.

50. Vorrichtung nach einem der Ansprüche 48 und 49, gekennzeichnet durch eine Einrichtung zum Weiterleiten verdichteten Gases von der Luftverdichtungseinrichtung zur Verbrennungszone.

51. Vorrichtung nach Anspruch 50, gekennzeichnet durch eine Wärmeaustauscheinrichtung, die ausgelegt ist, dieses Abgas nach dessen Expansion in der Gasturbine zu kühlen, und die komprimierte Luft, die in die Verbrennungszone eingeleitet wird und das ausströmende Spülgas, das von dem Pendeldruckadsorptionssystem freigesetzt wird, zu erhitzen.

52. Vorrichtung nach einem der Ansprüche 48 bis 51, gekennzeichnet durch eine Dampfturbinenkompressoreinrichtung zum Komprimieren des gereinigten Wasserstoff-Stickstoff-Synthesegases auf den Druck, der zur Ammoniak-Synthese benötigt wird, wobei diese Dampfturbine durch Dampf betrieben wird, der erzeugt und/oder überhitzt wurde durch die Wärme, die aus der Verbrennungszone stammt.

**Revendications**

1. Procédé pour la production d'ammoniac comprenant

(a) l'apport d'un gaz d'alimentation contenant de l'hydrogène sous une pression d'adsorption d'environ 2.068 à environ 6.895 kPa absolus à un système d'adsorption avec alternance de pression à lits multiples capables d'adsorber sélectivement les impuretés de l'hydrogène, chaque lit du système subissant le cycle opératoire:

(1) introduction du gaz d'alimentation à l'extrémité d'entrée du lit sous cette pression d'adsorption avec adsorption des impuretés hors de ce gaz et dégagement d'un courant d'hydrogène purifié non adsorbé à l'extrémité de sortie de ce lit;

(2) relâchement à cocourant partiel de la pression du lit avec dégagement du gaz de l'espace vide contenant de l'hydrogène à l'extrémité de sortie du lit;

(3) introduction de ce gaz de l'espace vide dégagé à l'extrémité de sortie d'un autre lit qui subit la remontée en pression afin d'égaliser la pression entre eux;

(4) relâchement à contre-courant de la pression du lit avec dégagement de gaz à partir de l'extrémité d'entrée de celui-ci pour abaisser la pression du lit jusqu'à sa pression de désorption inférieure;

(5) introduction d'un gaz de purge à l'extrémité de sortie du lit sous sa pression de désorption en vue de le purger, avec débit du gaz de purge par l'extrémité d'entrée du lit;

(6) remontée en pression du lit purgé jusqu'à cette pression d'adsorption, et

(7) répétition de ces phases (1)—(6) du cycle avec des quantités supplémentaires de gaz d'alimentation contenant l-hydrogène;

(b) l'apport d'azote à l'extrémité de sortie de chaque lit en tant que ce gaz de purge sous une haute pression de purge d'environ 414 à environ 689 kPa absolus, le courant d'hydrogène purifié non adsorbé, prélevé de chaque lit sous cette pression d'adsorption pendant le premier stade d'adsorption suivant contenant environ 16 à environ 26% en volume d'azote, lequel azote comprend les quantités résiduelles de gaz de purge subsistant dans le lit au terme de la purge, et

(c) la synthèse de l'ammoniac à partir de ce gaz hydrogène-azote purifié prélevé à ce système d'adsorption.

2. Procédé suivant la revendication 1, comprenant la détente du gaz de purge effluent dégagé à l'extrémité d'entrée du lit sous la pression d'environ 414 à environ 689 kPa absolus dans une turbine à détente de manière à produire de l'énergie.

3. Procédé suivant la revendication 2, dans lequel le gaz de purge effluent est détendu à peu près jusqu'à la pression atmosphérique.

4. Procédé suivant l'une quelconque des revendications 2 et 3, comprenant le chauffage du gaz de purge effluent avant son passage à la turbine à détente.

5. Procédé suivant la revendication 4, dans lequel le gaz de purge effluent est préchauffé jusqu'à environ 300°C à environ 600°C.

6. Procédé suivant l'une quelconque des revendications 4 et 5, dans lequel le gaz de purge effluent préchauffé et détendu est combiné avec de l'air, de l'oxygène ou un gaz riche en oxygène dans une zone de combustion et soumis à la combustion de manière à constituer une source de chaleur.

7. Procédé suivant la revendication 6, comprenant le chauffage du gaz de purge effluent par échange de chaleur indirect avec le gaz sortant de la zone de combustion avant la passage du gaz de purge effluent à la turbine à détente.

8. Procédé suivant l'une quelconque des revendications 6 et 7, comprenant le chauffage de l'air, de l'oxygène ou du gaz riche en oxygène par échange de chaleur indirect avec le gaz sortant de la zone de combustion avant son passage à la zone de combustion.

9. Procédé suivant l'une quelconque des revendications 4 et 5, dans lequel le gaz de purge effluent préchauffé est combiné avec de l'air, de l'oxygène ou un gaz riche en oxygène dans une zone de combustion et soumis à la combustion avant le passage à la turbine à détente.

10. Procédé suivant la revendication 9, comprenant le chauffage du gaz de purge effluent par échange de chaleur indirect avec le gaz sortant quittant la turbine à détente avant la passage du gaz de purge à la zone de combustion.

11. Procédé suivant l'une quelconque des revendications 9 et 10, comprenant le chauffage de l'air, de l'oxygène ou du gaz riche en oxygène par échange de chaleur indirect avec la gaz sortant quittant la turbine à détente avant le passage à la zone de combustion.

12. Procédé suivant l'une quelconque des revendications 6 à 11, comprenant le passage d'eau ou de vapeur d'eau d'alimentation par la zone de combustion, de manière à produire ou surchauffer de la vapeur d'eau.

13. Procédé suivant la revendication 12, comprenant le passage de la vapeur d'eau surchauffée à un turbocompresseur à vapeur d'eau pour qu'elle s'y détende, la turbine à vapeur entraînant le compresseur, de manière à comprimer le gaz hydrogène-azote purifié avant la synthèse de l'ammoniac à partir de ce gaz.

14. Procédé suivant l'une quelconque des revendications 2 à 5, comprenant l'entraînement d'un compresseur à air au moyen de l'énergie produite par le passage du gaz de purge effluent dans la turbine à détente.

15. Procédé suivant l'une quelconque des revendications 6 à 8, comprenant l'entraînement d'un compresseur à air au moyen de l'énergie produite par le passage du gaz de purge effluent dans la turbine à détente.

16. Procédé suivant l'une quelconque des revendications 9 à 13, comprenant l'entraînement d'un compresseur à air au moyen de l'énergie produite par le passage du gaz sortant dans la turbine à détente.

17. Procédé suivant la revendication 15, dans lequel une partie de l'air comprimé au moyen de l'énergie produite par le passage du gaz de purge effluent dans la turbine à détente est utilisée pour la combustion du gaz de purge effluent.

18. Procédé suivant la revendication 16, dans lequel une partie de l'air comprimé au moyen de l'énergie produite par le passage du gaz sortant dans la turbine à détente est utilisée pour la combustion du gaz de purge effluent.

19. Procédé suivant l'une quelconque des revendications 14 à 18, qui comprend le passage de l'air comprimé du compresseur à un système de fractionnement de l'air à double colonne.

20. Procédé suivant la revendication 19, dans lequel l'azote produit dans le système de fractionnement de l'air est utilisé en tant que le gaz de purge amené au système d'adsorption avec alternance de pression sous la pression de purge élevée.

21. Procédé suivant la revendication 20, dans lequel de l'azote est extrait de la colonne inférieure du système de fractionnement de l'air en tant que gaz de purge sous pression élevée.

22. Procédé suivant la revendication 20, dans lequel de l'azote sous pression relativement basse est prélevé au sommet de la colonne supérieure et est comprimé jusqu'à la pression de purge.

23. Procédé suivant l'une quelconque des revendications 19 à 22, comprenant le passage de l'oxygène produit dans le système de fractionnement de l'air à un système de production d'hydrogène pour y être utilisé dans l'oxydation d'hydrocarbures en vue de produire le gaz d'alimentation contenant l'hydrogène pour le système d'adsorption avec alternance de pression.

24. Procédé suivant la revendication 23, comprenant le prélèvement d'azote au sommet de la colonne supérieure du système de fractionnement de l'air, la compression de cet azote jusqu'à une pression d'environ 2.068 à environ 6.895 kPa absolus, sa liquéfaction et son recyclage à la colonne inférieure du système de fractionnement de l'air, et l'extraction d'oxygène liquide de la colonne supérieure et le pompage de l'oxygène jusqu'à la pression requise pour le système de production d'hydrogène.

25. Procédé suivant la revendication 23, dans lequel une partie de l'air qui est amené au système de fractionnement de l'air est comprimée jusqu'à environ 552 à environ 689 kPa absolus, la partie restante étant comprimée jusqu'à environ 2.068 à environ 6.205 kPa absolus, cet air comprimé jusqu'à la pression supérieure étant liquéfié et introduit dans le système de fractionnement de l'air à l'état de liquide, de manière à permettre que de l'oxygène liquide soit extrait du système, et le pompage de l'oxygéne liquide à la pression requise pour le système de production d'hydrogène.

26. Procédé suivant la revendication 23, dans lequel l'oxygène est extrait du système de fractionnement de l'air à l'état d'oxygène gazeux, et comprenant la compression de cet oxygène jusqu'à la pression requise pour le système de production d'hydrogène.

27. Procédé suivant l'une quelconque des revendications 23 à 26, dans lequel seule une fraction de l'oxygène produit à l'état gazeux ou liquide est amenée au système de production d'hydrogène.

28. Procédé suivant l'une quelconque des revendications 19 à 27, comprenant le passage de l'air qui doit être fractionné à une colonne de séparation de l'argon et l'exportation de l'argon prélevé au système de fractionnement de l'air.

29. Procédé suivant l'une quelconque des revendications 23 à 28, dans lequel le système de production d'hydrogène comprend un système d'oxydation partielle.

30. Procédé suivant l'une quelconque des revendications 23 à 28, dans lequel le système de production d'hydrogène comprend un système de gazéification de la houille.

31. Procédé suivant l'une quelconque des revendications 23 à 28, dans lequel le système de production d'hydrogène comprend un système de reformage primaire et un système de reformage secondaire, l'oxygène étant utilisé pour le reformage secondaire.

32. Procédé suivant la revendication 31, dans lequel le système de production d'hydrogène comprend un système de reformage primaire et un système de reformage secondaire, et comprenant le passage direct d'une partie de l'hydrocarbure d'alimentation au système de reformage secondaire pour y réagir avec de l'oxygène.

33. Procédé suivant l'une quelconque des revendication 23 à 28, dans lequel le système de production d'hydrogène comprend une unité d'oxydation partielle et une unité de reformage-échange, une partie de l'hydrocarbure d'alimentation passant directement à l'unité de reformage-échange.

34. Procédé suivant la revendication 33, dans lequel le système de production d'hydrogène comprend un système de vaporeformage comprenant une unité de reformage primaire, une unité de reformage secondaire et une unité de reformage-échange, l'oxygène étant utilisé dans l'unité de reformage secondaire, une partie de l'hydrocarbure d'alimentation étant amenée directement à l'unité de reformage-échange.

35. Appareil pour la production de l'ammoniac comprenant:

(a) un système d'adsorption avec alternance de pression à lits multiples capables d'adsorber sélectivement les impuretés d'une alimentation d'hydrogène gazeux;

(b) un système de fractionnement de l'air propre à alimenter en azote, sous une pression de gaz de purge élevée, le système d'adsorption avec alternance de pression;

(c) des conduites pour débiter un gaz de synthèse pour l'ammoniac hydrogène-azote purifié à partir du système d'adsorption avec alternance de pression;

(d) une zone de réaction pour la synthèse de l'ammoniac pour y convertir en ammoniac le gaz de synthèse de l'ammoniac;

(e) des conduites pour prélever le gaz de purge effluent contenant les impuretés du système d'adsorption avec alternance de pression sous la pression élevée, et

(f) une turbine à détente pour détendre le gaz de purge effluent.

36. Appareil suivant la revendication 35, comprenant un compresseur à air entraîné par la turbine à détente.

37. Appareil suivant la revendication 36, comprenant des moyens pour faire passer l'air comprimé du compresseur à air au système de fractionnement de l'air.

38. Appareil suivant l'une quelconque des revendications 36 et 37, comprenant des moyens pour extraire l'oxygène du système de fractionnement de l'air.

39. Appareil suivant l'une quelconque des revendications 36 et 37, comprenant un système de production d'hydrogène pour produire un courant d'alimentation d'hydrogène en vue de l'amener au système d'adsorption avec alternance de pression.

40. Appareil suivant la revendication 39, dans lequel le système de production d'hydrogène comprend un système d'oxydation partielle.

41. Appareil suivant la revendication 40, comprenant une unité de reformage-échange et des moyens pour faire passer une partie de l'alimentation de ce système à l'unité de reformage-échange.

42. Appareil suivant la revendication 39, dans lequel le système de production d'hydrogène comprend un système de gazéification de la houille.

43. Appareil suivant la revendication 39, comprenant des moyens pour extraire de l'oxygène du système de fractionnement de l'air.

44. Appareil suivant la revendication 43, dans lequel les moyens pour extraire de l'oxygène comprennent des moyens pour faire passer l'oxygène au système de production d'hydrogène.

45. Appareil suivant la revendication 44, dans lequel le système de production d'hydrogène comprend un système de vaporeformage primaire et un système de vaporeformage secondaire, l'oxygène étant amené au système de reformage secondaire.

46. Appareil suivant la revendication 45, comprenant une unité de reformage-échange et des moyens pour faire passer une partie du courant d'alimentation à l'unité de reformage-échange.

47. Appareil suivant l'une quelconque des revendications 36 à 46, comprenant des dispositifs échangeurs de chaleur pour préchauffer le gaz de purge effluent avant son passage à la turbine à détente.

48. Appareil suivant l'une quelconque des revendications 36 à 47, comprenant une zone de combustion pour soumettre le gaz de purge effluent à la combustion.

49. Appareil suivant la revendication 48, dans lequel la zone de combustion est située à l'amont du passage du gaz de purge effluent vers la turbine à détente.

50. Appareil suivant l'une quelconque des revendications 48 et 49, comprenant un dispositif pour faire passer le gaz comprimé du compresseur d'air à la zone de combustion.

51. Appareil suivant la revendication 50, comprenant un dispositif échangeur de chaleur propre à refroidir le gaz sortant après la détente dans la turbine à gaz et pour chauffer l'air comprimé qui est amené à la zone de combustion et le gaz de purge effluent prélevé au système d'adsorption avec alternance de pression.

52. Appareil suivant l'une quelconque des revendications 48 à 51, comprenant une turbine à vapeur d'eau avec ompresseur pour comprimer le gaz de synthèse hydrogène-azote purifié jusqu'à la pression requise pour la synthèse de l'ammoniac, la turbine à vapeur d'eau étant entraînée par la vapeur d'eau produite et/ou surchauffée par la chaleur provenant de la zone de combustion.